# FASCICULE DE BREVET EUROPEEN

(11) **EP 4 024 239 B1**
(45) Date de publication et mention de la délivrance du brevet: **26.04.2023**
(21) Numéro de dépôt: 21216733.2
(22) Date de dépôt: 22.12.2021
(51) Int. Cl.: G06F 21/10, G06F 21/60, H04W 12/08, H04W 12/10, H04L 9/08, H04W 12/04, H04L 9/30, H04L 9/32, H04L 9/40

(54) **PROCEDE ET SYSTEME DE STOCKAGE ET DE PARTAGE DE DONNEES**
VERFAHREN UND SYSTEM ZUM SPEICHERN UND TEILEN VON DATEN
METHOD AND SYSTEM FOR STORING AND SHARING DATA

(30) Priorité: 30.12.2020 FR 2014258
(43) Date de publication de la demande: 06.07.2022
(73) Titulaire: THALES, 92400 Courbevoie (FR)
(72) Inventeur: WIOREK, Jean-François, 92622 GENNEVILLIERS (FR); SOLIER, Stéphane, 92622 GENNEVILLIERS (FR); PAINCHAULT, Philippe, 92622 GENNEVILLIERS (FR)
(74) Mandataire: Atout PI Laplace

(56) Documents cités:
- US-A1- 2012 317 655
- XIAOMING WANG ET AL: "A Dynamic Access Control Scheme for Outsourced Database", NETWORK COMPUTING AND INFORMATION SECURITY (NCIS), 2011 INTERNATIONAL CONFERENCE ON, IEEE, 14 mai 2011 (2011-05-14), pages 3-7, XP032004142, DOI: 10.1109/NCIS.2011.9 ISBN: 978-1-61284-347-6
- SHUAI LIU ET AL: "Towards Efficient Over-Encryption in Outsourced Databases Using Secret Sharing", NEW TECHNOLOGIES, MOBILITY AND SECURITY, 2008. NTMS '08, IEEE, PISCATAWAY, NJ, USA, 5 novembre 2008 (2008-11-05), pages 1-5, XP031366619,

## Description

L'invention concerne un procédé permettant le stockage et le partage de données sous condition d'accès de manière totalement sécurisée vis-à-vis des utilisateurs et des personnes ayant le rôle d'administrateur dans le fonctionnement d'un système.

Le problème du stockage sécurisé de données et le problème de partage des données sous condition sont, dans la plupart des cas, traités de manière disjointe car ils obéissent à des contraintes opposées. Le document XP032004142 divulgue un schéma de contrôle d'accès dynamique pour une base de données externalisée, où les données stockées sont doublement chiffrées. Le document XP031366619 divulgue sur-chiffrement dans les bases de données externalisées à l'aide du partage de secret. Le document US 2012/317655 divulgue double chiffrement qui permet un contrôle dynamique de groupe d'utilisateurs.

Dans la présente invention, le besoin est de permettre un partage de données en définissant des conditions d'accès en termes de P/N présents pour autoriser un accès aux données, avec P le nombre personnes nécessaires (ou présents) pour autoriser l'accès aux données parmi N personnes qui disposent d'un élément d'autorisation.

L'un des objectifs de la présente invention est de fournir un procédé et un système simple d'utilisation et qui évite de mettre en place une infrastructure de Gestion de Clés publiques ou PKI.

Pour amener la confiance dans l'utilisation d'un tel système, il faut s'assurer de la sécurité des secrets pour se protéger d'administrateurs malveillants.

L'art antérieur divulgue différents mécanismes pour sécuriser les données tout en les partageant. Ces mécanismes utilisent des techniques séquentielles permettant de sécuriser les données ou de les partager, sans avoir une résolution cryptographique de bout en bout.

Dans la suite de la description, les définitions et sigles suivants seront utilisés :
Dépositaire A1 désigne un individu qui souhaite stocker dans un endroit sécuritaire des données et donner des droits d'accès à un ou plusieurs individus, les « ayants droits » et les « accédants »,
K_{User} clé de chiffrement/déchiffrement du fichier utilisée par le dépositaire et par un accédant,
Accédant AS1 désigne un individu qui souhaitera accéder aux données mémorisées, à un fichier de données. Il possède une partie du secret et doit obtenir le déblocage des ayants droits pour accéder à ce fichier,
Ayant droit nommé RSSI désigne un individu qui sera interrogé pour autoriser l'accès des données à un accédant. Il possède une partie du secret nécessaire à la reconstruction de la clé du dépositaire Kᵤₛₑᵣ et de celle utilisée pour le stockage des données K_{stock}. II doit avoir le déblocage des ayants droits pour accéder aux données ou fichier. K_{Pubrssi} : la clé publique d'un ayant droit RSSI.

Les notations A1, AS1 et RSSI sont des notations génériques utilisées dans le cadre de la présente invention pour désigner une personne ayant un rôle de dépositaire, un rôle d'accédant ou un rôle d'ayant droit. Une même personne peut cumuler plusieurs des rôles décrits. Il peut aussi y avoir plusieurs ayants droits et plusieurs accédants. K_{Stock} désigne la clé de chiffrement/déchiffrement au niveau d'un serveur qui gère et accède à un espace de stockage des données ou de fichiers.

Chaque secret est chiffré pour son destinataire en utilisant sa clé publique générée par une autorité de délivrance de clés. Les autres clés seront définies au fur et à mesure de la description.

La clé de chiffrement/déchiffrement K_{User} est, par exemple, générée à partir d'une fonction polynomiale Poly(Q_{AS1}, Q_{RSSI}) connue de l'homme du métier, les composantes de la clé générée correspondent à chaque secret généré pour les acteurs du système, un secret Q_{AS1} pour un accédant, un secret Q_{RSSI} pour l'ayant droit, etc. Il en est de même pour la clé de chiffrement/déchiffrement de stockage K_{Stock} = Poly(P_{AS1}, P_{RSSI}), un secret P_{AS1} pour un accédant, un secret P_{RSSI} pour l'ayant droit, etc.

Un accédant AS1 ou un ayant droit RSSI peut posséder plusieurs secrets en fonction de la répartition des secrets (en fonction des règles de partage entre les différentes personnes).

Le sigle DSS désigne de manière générique un service de sécurisation de fichiers, USKS désigne un service de gestion des clés,
SKS désigne un service de gestion des clés de stockage,
IBE désigne de manière générique un serveur de clés.

Dans la suite de la description, pour la notation de chiffrement et de lecture des éléments : on notera (A)_{Key1} l'élément A qui est chiffré par la clé « Key1 ». On peut avoir aussi plusieurs niveaux de chiffrement ((A)_{Key1})_{Key2}, dans ce cas, A est chiffré par la clé Key1 et le résultat du chiffrement est lui-même chiffré par la clé « Key2 ». Pour effectuer le déchiffrement, il faut d'abord déchiffrer ((A)_{Key1})_{Key2} avec « Key2 » puis, le résultat obtenu (A)_{Key1} devra être déchiffré par « Key1 » pour obtenir l'élément A.

La description utilise indifféremment le terme « fichier » ou le terme « données » pour désigner un même objet, i.e., les données chiffrées à mémoriser au sein d'une zone de stockage sécurisée.

L'objet de l'invention repose sur une nouvelle approche qui met en place des mécanismes cryptographiques permettant de garantir la sécurisation des données et les conditions d'accès à ces données, tout en permettant un déploiement simple pour les utilisateurs et un stockage sécurisé quelque soit le type de stockage. Le procédé selon l'invention repose notamment sur un double chiffrement avec partage de secret.

L'invention concerne un procédé de stockage et de partage de données chiffrées dans un système comprenant au moins un dépositaire, au moins un accédant et au moins un ayant droit, un service de sécurisation disposant d'une clé publique K_{PubDSS} et d'une clé privée K_{PrivDSS}, un service de gestion des clés de stockage K_{Stock} utilisées pour le stockage des données, un service de gestion des clés de chiffrement/déchiffrement K_{User}, un serveur de clés configuré pour générer une clé à partir d'un identifiant d'un utilisateur, comportant en combinaison au moins les étapes suivantes :
- un accédant AS1 parmi le ou les accédants s'authentifie auprès de services applicatifs et émet une requête R_{qa} d'accès à un fichier de données chiffrées et stocké D_{cc}, F1,
- lesdits services applicatifs transmettent la requête R_{qa} d'accès à un ayant droit nommé RSSI parmi le ou les ayants droits, F2,
- l'ayant droit RSSI demande au service de gestion des clés de stockage le déblocage de la clé de chiffrement et ledit service de gestion des clés de stockage retourne à l'ayant droit RSSI son secret chiffré associé à la clé Kₛₖₛ du service SKS, sa clé publique Pub_{RSSI}, ((P_{RSSI})_{Ksks})_{PubRSSI}, et la liste L_{acc} des personnes ayant un droit d'accès au fichier, F3, F4,

- après authentification de l'ayant droit, un serveur de clés génère une clé privée K_{PrivRssi} pour ledit ayant droit, F5a,
- l'ayant droit RSSI demande au service de gestion des clés de stockage le secret à transformer ((P_{RSSI})_{Ksks})_{PubRSSI} et utilise sa clé privée associée K_{PrivRssi} pour transformer ledit secret ((P_{RSSI})_{Ksks})_{PubRSSI} en déchiffrant avec sa clé privée K_{PrivRssi} et en chiffrant avec la clé publique K_{PubAS1} de l'accédant AS1 pour obtenir un deuxième secret chiffré ((P_{RSSI})_{Ksks})_{PubAS1} transmis au service de gestion des clés de stockage, pour stockage, F5b,
- l'ayant droit RSSI demande au service de gestion des clés, le secret associé à la clé du dépositaire Kᵤₛₑᵣ à transformer ((O_{RSSI})_{Kusks})_{PubRSSI} et en utilisant sa clé privée K_{PrivRssi} transforme ledit secret ((Q_{RSSI})_{Ksks})_{PubRSSI} en déchiffrant avec sa clé privée K_{PrivRssi} et en chiffrant avec la clé publique K_{PubAS1} de l'accédant AS1, le secret transformé ((O_{RSSI})_{Kusks})_{PubAS1} est transmis pour stockage par le service de gestion des clés, F6,
- les services applicatifs indiquent la disponibilité du fichier doublement chiffré, F7,
- l'accédant AS1 s'authentifie auprès des services applicatifs et émet une requête R_{f} pour récupérer le fichier chiffré, G1,
- l'accédant AS1 demande la clé du fichier au service de gestion des clés de stockage, G2,
- le service de gestion des clés de stockage, retourne à l'accédant AS1 le secret de l'ayant droit RSSI doublement chiffré ((P_{RSSI})_{Ksks})_{PubAS1} pour la clé de stockage K_{stock} et le secret de l'accédant AS1 doublement chiffré ((P_{AS1})_{Ksks})_{PubAS1} associé à la clé K_{User}, G3,
- l'accédant AS1 s'authentifie auprès du serveur de clés pour obtenir sa clé privée K_{PRIVAS1} associée à sa clé publique K_{PubAS1}, G4a,
- l'accédant AS1 transforme les deux secrets chiffrés qu'il a reçus ((P_{RSSI})_{Ksks})_{PubAS1} et ((P_{AS1})_{Ksks})_{PubAS1} en les déchiffrant avec sa clé privée K_{PRIVAS1} pour obtenir respectivement deux secrets (P_{RSSI})_{Ksks}, (P_{AS1})_{Ksks}, G4b,
- l'accédant AS1 envoie au service de gestion des clés de stockage, les deux secrets associés à la clé de stockage K_{stock} (P_{RSSI})_{Ksks}, (P_{AS1})_{Ksks}, G4c,
- le service de gestion des clés de stockage recalcule la clé de stockage K_{Stock} à partir des secrets (P_{RSSI})_{Ksks}, (P_{AS1})_{Ksks} et retourne la clé de stockage chiffrée avec sa clé publique (K_{Stock})_{KPubDSS}, G4d,
- l'accédant AS1 demande au service de sécurité, le fichier et transmet la clé de stockage du fichier (K_{stock})_{KPubDSS}, G5,
- le service de sécurité récupère le fichier après du service de stockage, G6a, et déchiffre avec sa clé privée K_{PrivDSS}, le ficher ((Données)_{KUser} + (P_{AS1})_{Ksks})_{PubAS1})_{KStock} avec la clé de stockage K_{Stock} et retourne le fichier déchiffré à l'accédant AS1, (Données)_{KUser} + (P_{AS1})_{Ksks})_{PubAS1}, G6a, G6b,
- l'accédant AS1 transforme les deux secrets chiffrés ((O_{RSSI})_{Kusks})_{PubAS1} ((Q_{As1})_{Kusks})_{PubAS1} associés à sa clé Kᵤₛₑᵣ en (O_{RSSI})_{Kusks} (Q_{AS1})_{Kusks} en déchiffrant avec sa clé privée K_{PRIVAS1} et les envoie au service de gestion des clés, G7,
- le service de gestion des clés recalcule la clé du dépositaire K_{User} à partir des secrets (Q_{RSSI})_{Kusks}, (Q_{AS1})_{Kusks} transmis par l'accédant AS1 et retourne la nouvelle clé chiffrée(K_{User})_{KPubAS1}, G8,
- l'accédant AS1 déchiffre (K_{User})_{KPubAs1} avec sa clé privée, K_{PRIVAS1}, puis l'accédant AS1 déchiffre le fichier (Données)_{KUser} avec K_{User} et avertit le service applicatif.

Le procédé comporte, par exemple, une étape de stockage d'un fichier dans laquelle :
- un dépositaire A1 parmi le ou les dépositaires s'authentifie auprès des services applicatifs et demande le droit de déposer un fichier dans une zone de stockage,
- le service de gestion des clés génère une clé K_{User} et un nombre de secrets de partage K_{User} = (Q_{AS1}, Q_{RSSI}) correspondant au nombre d'accédants et au nombre d'ayants droits, E2a,
- Le service de gestion des clés :
   - demande au serveur de clés la clé publique K_{PubA1} du dépositaire A1, la clé publique K_{PubRSSI} de l'ayant droit RSSI et la clé publique K_{PubAS1} de l'accédant AS1, E2b,
   - demande au serveur de clés la clé publique K_{PubA1} du dépositaire A1, la clé publique K_{PubRSSI} de l'ayant droit RSSI et la clé publique K_{PubAS1} de l'accédant AS1, E2b,
   - demande au serveur de clés la clé publique K_{PubA1} du dépositaire A1, la clé publique K_{PubRSSI} de l'ayant droit RSSI et la clé publique K_{PubAS1} de l'accédant AS1, E2b,
   - chiffre les secrets de partage générés avec sa clé K_{Usks} et les clés publiques des accédants et des ayants droits, E2c,
   - chiffre K_{User} pour obtenir(K_{User})_{KPubA1} et retourne la clé (K_{User})_{KPubA1} au dépositaire A1, E2d
   - Le dépositaire A1 demande au service de gestion des clés de stockage la création d'une clé de partage pour l'accédant AS1 et d'une portion de clé pour l'ayant droit RSSI, E3a,
   - Le service de gestion des clés de stockage, demande au serveur de clés la clé publique K_{PubRSSI} de l'ayant droit RSSI et la clé publique K_{PubAS1} de l'accédant AS1, E3b,
- Le service de gestion des clés de stockage SKS chiffre :
   - les secrets avec la clé de stockage K_{Stock} ((P_{AS1})_{Ksks})_{KPubAS1}, ((P_{RSSI})_{Ksks})_{KPubRSSI}
   - la clé de stockage K_{Stock} par la clé publique du service de sécurisation : (K_{Stock}) KPubdss, E3c,
   - retourne la clé (K_{Stock}) _{KPubdss} et les secrets ((P_{AS1})_{Ksks})_{KPubAS1}, ((P_{RSSI}) _{Ksks})_{KPubRSSI} au dépositaire A1, E3d,
   - le dépositaire A1 s'authentifie et demande au serveur de clés la clé privée K_{PrivA1} du dépositaire A1,
   - le dépositaire A1 déchiffre la clé (K_{User})_{KPubA1} et chiffre la donnée avec K_{User}, (Données)_{KUser}, E4b,
   - le dépositaire A1 envoie au service de sécurisation : les données (Données)_{KUser} à stocker, la clé de chiffrement (K_{Stock}) _{KPubdss} et les informations associées pour être stockées ((P_{AS1})_{Ksks})_{PubAS1}, (P_{RSSI})_{Ksks})_{PubRSSI}, E4c,
   - le service de sécurisation déchiffre la clé de chiffrement (K_{Stock}) _{KPubdss} avec sa clé privée K_{Privdss}, chiffre avec la clé K_{Stock} (Données)_{KUser} et ajoute les informations ((PAS1)Ksks)PubAS1, (P_{RSSI})_{Ksks})_{PubRSSI} qui donne ((Données)_{KUser})_{KStock} + (PAS1)Ksks)PubAS1 + (P_{RSSI})_{Ksks})_{PubRSSI}, E5,
   - le service de sécurisation transmet au stockage le fichier doublement chiffré ((Données)_{KUser} + (P_{AS1})_{Ksks})_{PubAS1})_{KStock}+ (P_{RSSI})_{Ksks})_{PubRSSI}, E6.

Le procédé peut comporter en outre une étape d'horodatage par le dépositaire avant stockage.

Les secrets sont, par exemple, générés en exécutant une fonction polynomiale.

L'invention concerne aussi un système de stockage et de partage de données dans un système comprenant au moins un dépositaire A1, au moins un accédant AS1 et au moins un ayant droit RSSI, dialoguant au moyen d'un protocole de communication caractérisé en ce qu'il comporte au moins les éléments suivants :
Ledit dépositaire A1 dispose d'un terminal sur lequel est installée une application, disposant de fonctions cryptographiques (génération de clés de chiffrement/déchiffrement, chiffrement des données, des clés et des secrets), un processeur configuré pour exécuter les étapes du procédé selon l'invention et un module de communication,

Ledit au moins accédant AS1 dispose d'un terminal sur lequel est installée une application disposant de fonctions cryptographiques permettant le déchiffrement des fichiers/données, des clés et des secrets, un processeur configuré pour exécuter les étapes du procédé selon l'une des revendications précédentes et un module de communication,

Ledit au moins ayant droit RSSI dispose d'un terminal sur lequel est installée une application, disposant de fonctions cryptographiques permettant le déchiffrement et chiffrement des secrets, un processeur configuré pour exécuter les étapes du procédé selon l'invention, un module de communication et une zone de stockage.

Les fonctions de génération de secrets sont, par exemple, des fonctions polynomiales.

Les applicatifs peuvent être des logiciels métiers.

Le protocole de communication est, par exemple, le protocole HTTPS/TLS, HyperText Transfer Protocol Secure/ Transport Layer Security.

D'autres caractéristiques, détails et avantages de l'invention ressortiront à la lecture de la description faite en référence aux dessins annexés donnés à titre d'exemple non limitatifs et qui représentent, respectivement :
La figure 1 est un exemple de topologie d'une architecture mettant en oeuvre l'invention,
La figure 2 est une illustration des échanges entre les différents acteurs du système de la figure 1,
La figure 3 est un diagramme des flux contenant les requêtes et les étapes mises en oeuvre pour le dépôt de données chiffrées dans un espace de stockage,
La figure 4 est un diagramme des flux contenant les requêtes et les étapes mises en oeuvre lors d'une demande de déblocage de données,
La figure 5 est un diagramme des flux contenant les requêtes et les étapes mises en oeuvre pour l'accès des données,
La figure 6 est une illustration des échanges avec plusieurs ayant droits.

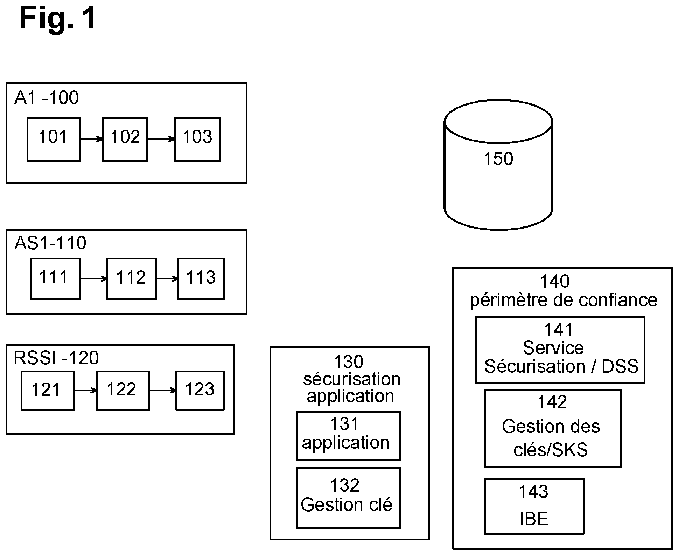

Afin de bien faire comprendre l'objet de l'invention, la figure 1 illustre un exemple de réalisation d'un système selon l'invention mettant en oeuvre un dépositaire A1, un accédant AS1 et un ayant droit RSSI. Les échanges d'information entre les différents acteurs du système qui vont être décrits ci-après, se font via un protocole de communication connu de l'homme du métier, par exemple le protocole HTTPS/TLS, HyperText Transfer Protocol Secure/ Transport Layer Security.

Le dépositaire A1, dispose d'un terminal intelligent, tel qu'un ordinateur, ou un téléphone mobile 100 comprenant une application 101, disposant de fonctions cryptographiques (génération de clés de chiffrement/déchiffrement, chiffrement des données, des clés et des secrets), un processeur 102 configuré pour exécuter les étapes du procédé selon l'invention et un module de communication 103 adapté à exécuter le protocole de communication et de dialoguer avec les autres acteurs et systèmes.

Un accédant AS1 dispose d'un terminal intelligent 110 sur lequel est installée une application 111, disposant de fonctions cryptographiques permettant le déchiffrement des fichiers/données, des clés et des secrets, un processeur 112 configuré pour exécuter les étapes du procédé selon l'invention et un module de communication 113 permettant d'exécuter le protocole de communication et de dialoguer avec les autres acteurs et systèmes.

Sans sortir du cadre de l'invention, le système et le procédé selon l'invention peuvent être mis en oeuvre au sein d'un système comportant plusieurs accédants de type AS1.

L'ayant droit RSSI, dispose d'un terminal intelligent 120 sur lequel est installée une application 122, disposant de fonctions cryptographiques permettant le déchiffrement et chiffrement des secrets, un processeur 122 configuré pour exécuter les étapes du procédé selon l'invention et un module de communication 123 permettant d'exécuter le protocole de communication et de dialoguer avec les autres acteurs et systèmes.

Sans sortir du cadre de l'invention, le système et le procédé selon l'invention peuvent être mis en oeuvre au sein d'un système comportant plusieurs ayant droits.

Le système comprend un serveur 130 ayant pour objectif de fournir les fonctions de sécurisation de fichiers aux applications. Le serveur comprend un ou plusieurs services applicatifs 131 et un module 132 USKS ayant une fonction de gestion de clés de chiffrement/déchiffrement. Le service USKS prend en charge la gestion polynomiale de la clé Kᵤₛₑᵣ et de ses secrets associés Qx. L'USKS dispose de sa propre clé K_{Usks} pour protéger les secrets Qx en plus du chiffrement par la clé publique des ayants droits.

Les services applicatifs sont par exemple un portail métier, comme celui d'une assurance pour le dépôt de preuves de possession.

Un serveur de confiance 140 comprend un service de sécurisation DSS, 141, un module de gestion de clés de chiffrement/déchiffrement SKS, 142. Le service DSS effectue le chiffrement des fichiers avec la clé de chiffrement de stockage K_{stock} du fichier contenant les données à mémoriser. La clé K_{stock} reçue chiffrée par la clé publique K_{PubDSS} du service DSS. Le service DSS dispose de son propre « biclé », une clé publique K_{PubDSS} et une clé privée K_{PrivDSS}. Le service SKS prend notamment en charge la gestion polynomiale de la clé K_{stock} et de ses secrets associés Px. Le service SKS dispose de sa propre clé Ksks pour protéger les secrets en plus du chiffrement par la clé publique des ayants droits ou celle des accédants. Le serveur de confiance 140 comprend aussi un serveur de clés IBE, 143. Le module d'identité est configuré pour générer la clé publique et la clé privée en échange d'une donnée identifiant une personne, par exemple une adresse de courrier électronique. L'utilisateur possédant une adresse courriel se connecte au serveur de clés IBE 143 pour accéder à la partie privée de sa clé avec authentification. Le serveur de clés IBE fournira les clés publiques des acteurs en fonction d'un identifiant.

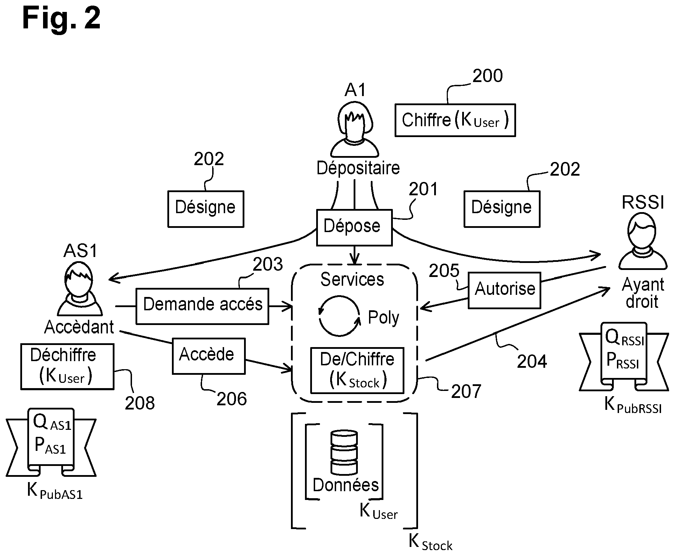

La figure 2 illustre les échanges entre les différents acteurs du système illustrés à la figure 1.

Le dépositaire A1 chiffre, 200, les données qu'il souhaite déposer, 201, dans la zone de stockage. Il désigne, 202, les personnes autorisées à accéder aux données chiffrées et à donner l'accès à ces données, un accédant et un ayant droit dans cet exemple. L'accédant émet, 203, une demande d'accès R_{qa} auprès des services applicatifs 131. Ces derniers interrogent, 204, l'ayant droit qui, en retour, autorise l'accès à l'accédant, 205. L'accédant accède, 206, aux données chiffrées. Les services applicatifs 207 vont déchiffrer les données en utilisant la clé de chiffrement K_{stock} utilisée pour le stockage des données. L'accédant, 208, récupère les données chiffrées par Kᵤₛₑᵣ et les informations nécessaires au déchiffrement et les déchiffre, 208.

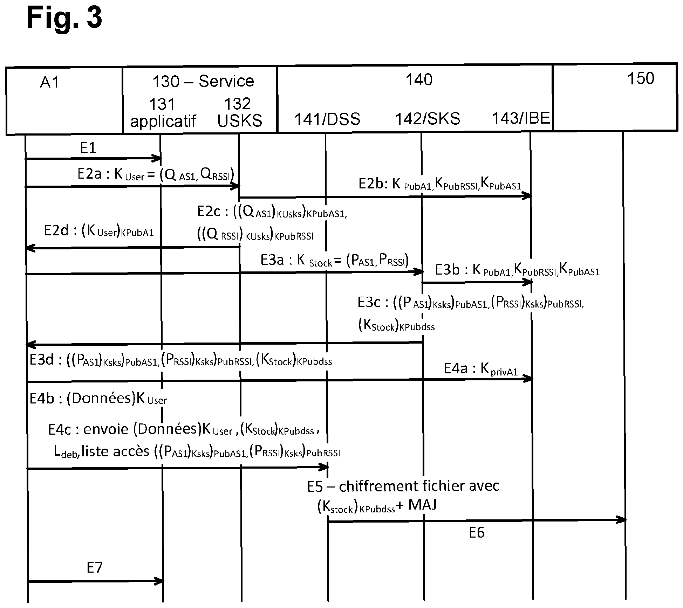

Les étapes explicitées ci-après en relation aux figures 3, 4 et 5 utilisent le ou les protocoles de communication du système via les modules de communication de chacun des acteurs. Ce protocole étant un support technique à l'exécution des échanges entre les acteurs ne sera pas détaillé. Dans ces figures, les éléments suivants seront utilisés : Q_{AS1}, Q_{RSSI} correspondent aux secrets de la clé Kᵤₛₑᵣ (du dépositaire) pour l'accédant AS1 et pour l'ayant droit RSSI, P_{AS1}, P_{RSSI} correspondent aux secrets de la clé de stockage K_{stock} pour l'accédant AS1 et pour l'ayant droit RSSI.

Lors d'une première étape E1, le dépositaire A1 s'authentifie auprès des services applicatifs 131 et demande le droit de déposer un ensemble de données (ou fichier) dans la zone de stockage,

Lors de la deuxième étape E2a, le module USKS, 132, de gestion des clés des dépositaires génère une clé K_{User} et des portions de clés K_{User} = (Q_{AS1}, Q_{RSSI}) avec le secrets Q_{AS1} de partage pour l'accédant AS1 et le secret Q_{RSSI} pour l'ayant droit RSSI.

Lors de l'étape E2b, l'USKS, 132, demande au serveur de clés IBE 143 la clé publique K_{PubA1} du dépositaire A1, la clé publique K_{PubRSSI} de l'ayant droit RSSI et la clé publique K_{PubAS1} de l'accédant AS1.
Lors de l'étape E2c, l'USKS, 132, dispose de la clé K_{Usks} et il chiffre les secrets O_{AS1} et Q_{RSSI} avec les clés K_{Usks} et K_{PubAS1} pour obtenir ((O_{AS1})_{KUsks})_{KPubAS1} et ((ORSSI) _{KUsks})_{KPubRSSI},
Lors de l'étape E2d, l'USKS, 132, chiffre K_{User} pour obtenir(K_{User})_{KPubA1 et} retourne la clé (K_{User})_{KPubA1} au dépositaire A1,
Lors de l'étape E3a, le dépositaire A1 demande au service SKS, 142, de gestion des clés de stockage la création d'une portion de clé pour l'accédant AS1 et d'une portion de clé pour l'ayant droit RSSI,
Le service SKS génère une clé K_{Stock} et des portions de clés K_{Stock} = (P_{AS1}, P_{RSSI}) respectivement le secret P_{AS1} pour l'accédant AS1 et le secret P_{RSSI} pour l'ayant droit RSSI,

Lors de l'étape E3b, le service SKS, 142, demande au serveur de clés, 143, la clé publique K_{PubRSSI} de l'ayant droit RSSI et la clé publique K_{PubAS1} de l'accédant AS1.

Lors de l'étape E3c, le service SKS, 142, dispose de la clé de chiffrement Ksks du service SKS et il chiffre les secrets ((P_{AS1})_{Ksks})_{KPubAS1}, ((P_{RSSI}) _{Ksks})_{KPubRSSI}. Le service SKS chiffre aussi K_{Stock} par la clé publique du DSS : (K_{Stock}) _{KPubdss}.

Lors de l'étape E3d, le service SKS, 142, retourne la clé (K_{Stock}) _{KPubdss} et les secrets ((P_{AS1})_{Ksks})_{KPubAS1}, ((P_{RSSI}) _{Ksks})_{KPubRSSI} au dépositaire A1.

Lors de l'étape E4a, le dépositaire A1 s'authentifie et demande au serveur de clés IBE, 143, la clé privée K_{PrivA1} du dépositaire A1.

Lors de l'étape E4b, le dépositaire A1 déchiffre la clé (K_{User})_{KPubA1} et chiffre la donnée avec la clé de chiffrement K_{User} : (Données)_{KUser}.

Lors de l'étape E4c, le dépositaire A1 envoie au service DSS, 141 : les données (Données)_{KUser} à stocker, la clé de chiffrement (K_{Stock}) _{KPubdss} et les informations associées pour être stockées ((P_{AS1})_{Ksks})_{PubAS1}, (P_{RSSI})_{Ksks})_{PubRSSI}.

Lors de l'étape E5, le service DSS déchiffre la clé de chiffrement (K_{Stock}) _{KPubdss} avec sa clé privée K_{PriVdss}, et chiffre avec K_{Stock} (Données)_{KUser} et ajoute les informations ((PAS1)Ksks)PubAS1, (P_{RSSI})_{Ksks})_{PubRSSI} qui donne ((Données)_{KUser})_{KStock} + (P_{AS1})_{Ksks})_{PubAS1} + (P_{RSSI})_{Ksks})_{PubRSSI}.

Lors de l'étape E6, le service DSS, 141, dépose via un service de stockage,150, le fichier ((Données)_{KUser})_{KStock} et les secrets chiffrés (P_{AS1})_{Ksks})_{PubAS1}+ (P_{RSSI})_{Ksks})_{PubRSSI}.

Lors de l'étape E7, après la réalisation des étapes précédentes, le dépositaire A1 informe le service applicatif 131 de la réussite ou non du dépôt des données et des informations associées (liste L_{ad} des ayants droits et la liste L_{ac} des accédants).

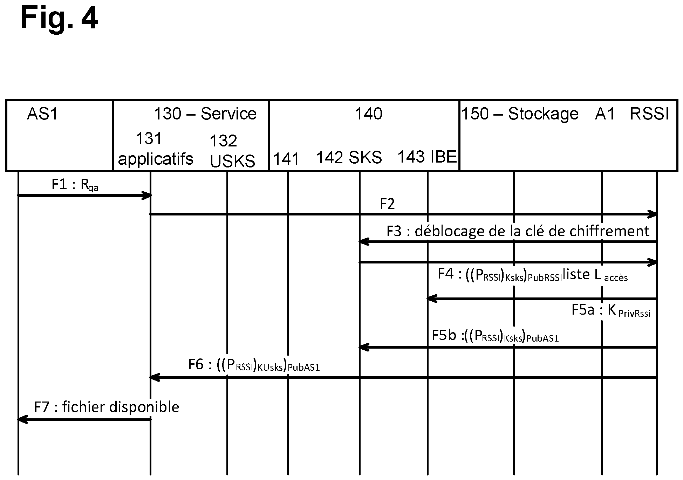

La figure 4 illustre une succession d'étapes exécutées par un accédant AS1 déposant une demande de déblocage d'un fichier.
Lors d'une première étape F1, un accédant AS1 s'authentifie auprès des services applicatifs 131 et émet une requête R_{qa} d'accès au fichier de données qui a été déposé par le dépositaire selon les étapes explicités ci-avant et en relation avec la figure 3,
Lors d'une deuxième étape F2, les services applicatifs 131 transmettent la requête de déblocage à l'ayant droit RSSI,
Lors d'une troisième étape F3, l'ayant droit RSSI demande au service SKS le déblocage de la clé de chiffrement du fichier,
Lors d'une quatrième étape F4, le service SKS, 142, retourne à l'ayant droit RSSI son secret chiffré par la clé de SKS et sa clé publique ((P_{RSSI})_{Ksks})_{PubRSSI} et la liste L_{accès} des personnes ayant le droit d'accès au fichier,
Lors de l'étape F5a, l'ayant droit RSSI s'authentifie et demande au serveur de clés IBE 143 sa clé privée K_{PrivRssi},
Lors de l'étape F5b, l'ayant droit RSSI demande au service SKS, 142, le secret à transformer ((P_{RSSI})_{Ksks})_{PubRSSI} et en utilisant la clé privée associée K_{PrivRssi} transforme le secret pour RSSI ((P_{RSSI})_{Ksks})_{PubRSSI} en déchiffrant avec sa clé privée K_{PrivRssi} et en chiffrant avec la clé publique K_{PubAS1} en ((P_{RSSI})_{Ksks})_{PubAS1} et retourne le secret chiffré de RSSI associé à la clé de stockage ((P_{RSSI})_{Ksks})_{PubAS1}. au service SKS, 142 qui le stocke,
Lors de l'étape F6, l'ayant droit RSSI demande au service USKS,132 le secret chiffré à transformer ((Q_{RSSI})_{Kusks})_{PubRSSI} et, en utilisant sa clé privée associée K_{PrivRssi}, transforme le secret pour RSSI ((O_{RSSI})_{Ksks})_{PubRSSI} en déchiffrant avec sa clé privée K_{PrivRssi} et en chiffrant avec la clé publique de l'accédant AS1 K_{PubAS1} en ((O_{RSSI})_{Kusks})_{PubAS1} et retourne ((Q_{RSSI})_{Kusks})_{PubAS1} au service USKS,132 qui le stocke,
Lors de l'étape F7, les services applicatifs, 131 ont reçu le statut de l'USKS, 132, passent le fichier à l'état de «disponible» et indiquent à l'accédant AS1 que le fichier est disponible. L'accédant AS1 doit ensuite obtenir le droit et les clés pour déchiffrer les données.

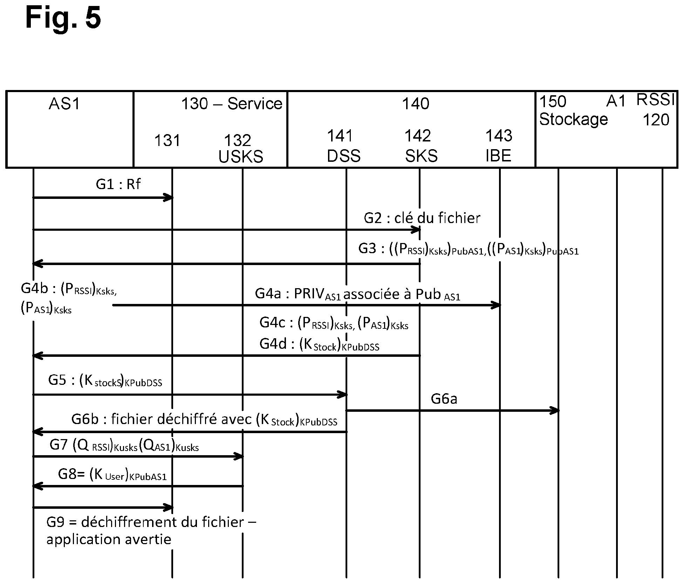

La figure 5 illustre les étapes mises en oeuvre pour obtenir le fichier déverrouillé par l'accédant AS1.
Lors d'une première étape G1, l'accédant AS1 s'authentifie auprès des services applicatifs 131 et demande de pouvoir récupérer le fichier,
Lors d'une deuxième étape G2, l'accédant AS1 demande la clé du fichier au service SKS, 142.
Lors d'une troisième étape G3, le service SKS, 142, retourne à l'accédant AS1 le secret de RSSI ((P_{RSSI})_{Ksks})_{PubAS1} et le secret de l'accédant AS1 ((P_{AS1})_{Ksks})_{PubAS1} . L'accédant AS1 dispose alors des deux portions des secrets ((P_{RSSI})_{Ksks})_{PubAS1} et ((P_{AS1})_{Ksks})_{PubAS1},
Lors d'une quatrième étape G4a, l'accédant AS1 s'authentifie auprès du serveur de clés IBE 143 et obtient sa clé privée K_{PrivAS1} associée à sa clé publique K_{PubAS1},
Lors de l'étape G4b L'accédant AS1 transforme les deux secrets chiffrés qu'il a reçus ((P_{RSSI})_{Ksks})_{PubAS1} et ((P_{AS1})_{Ksks})_{PubAS1} en les déchiffrant avec la clé K_{PrivAS1} pour obtenir respectivement en (P_{RSSI})_{Ksks}, (P_{AS1})_{Ksks},.
Lors de l'étape G4c, l'accédant AS1 envoie au SKS, 142, les secrets (P_{RSSI})_{Ksks}, (P_{AS1})_{Ksks},
Lors de l'étape G4d, SKS, 142 recalcule la clé de stockage K_{Stock} à partir du secret de RSSI (P_{RSSI})_{Ksks}, et le secret de l'accédant AS1 (P_{AS1})_{Ksks} et retourne (K_{Stock})_{KPubDSS},
Lors de l'étape G5, l'accédant AS1 demande au service DSS, 141, le fichier et transmet la clé de stockage du fichier (K_{stock})_{KPubDss},
Lors de l'étape G6a le service DSS 141 récupère le fichier auprès du service de stockage, 150,
Lors de l'étape G6b le service DSS 141 le déchiffre (K_{Stock})_{KPubDSS} avec sa clé privée K_{PriDSS}, déchiffre le ficher ((Données)_{KUser})_{KStock} avec la clé K_{Stock} et retourne le fichier (Données)_{KUser} à l'accédant AS1,
Lors de l'étape G7, l'accédant AS1 transforme les secrets de RSSI ((O_{RSSI})_{Kusks})_{PubAS1} ((Q_{AS1})_{Kusks})_{PubAS1} en (Q_{RSSI})_{Kusks} (Q_{AS1})_{Kusks} en déchiffrant avec sa clé privée K_{PRIVAS1} et envoie les secrets chiffrés (Q_{RSSI})_{Kusks} et (Q_{AS1})_{Kusks} au service USKS, 132,
Lors de l'étape G8, le service USKS, 132, recalcule la clé de chiffrement/déchiffrement K_{User} à partir du secret de RSSI (Q_{RSSI})_{Kusks}, et du secret d'AS1 (Q_{AS1})_{Kusks} et retourne la clé (K_{User})_{KPubAS1} chiffrée avec la clé publique de l'accédant AS1,
Lors de l'étape G9, l'accédant AS1 déchiffre (K_{User})_{KPubAs1} avec sa clé privée, K_{PRIVAS1}. Puis l'accédant AS1 déchiffre le fichier (Données)_{KUser} avec K_{User} et avertit le service applicatif, 131 que le ficher a été déchiffré.

Selon une variante de réalisation, le procédé peut comporter une étape d'horodatage du fichier de données à stocker, permettant ainsi de donner une date certaine au fichier mémorisé.

Selon une variante de réalisation, le procédé lors de l'étape de chiffrement par la clé publique du service DSS ajoute un horodatage ou « timestamp ». Le service DSS vérifie la validité de la demande grâce à l'horodatage. La durée de vie de cet horodatage est paramétrable.

Le procédé peut aussi inclure un mécanisme de challenge/réponse dans les échanges avec les services DSS, USKS, SKS, connu de l'homme du métier afin d'améliorer le mécanisme anti-rejeu. En cas d'interception de la requête par un tiers non autorisé, la requête ne peut être rejouée. Cela permet de protéger les requêtes vers les services USKS 132, SKS 142 et DSS 141.

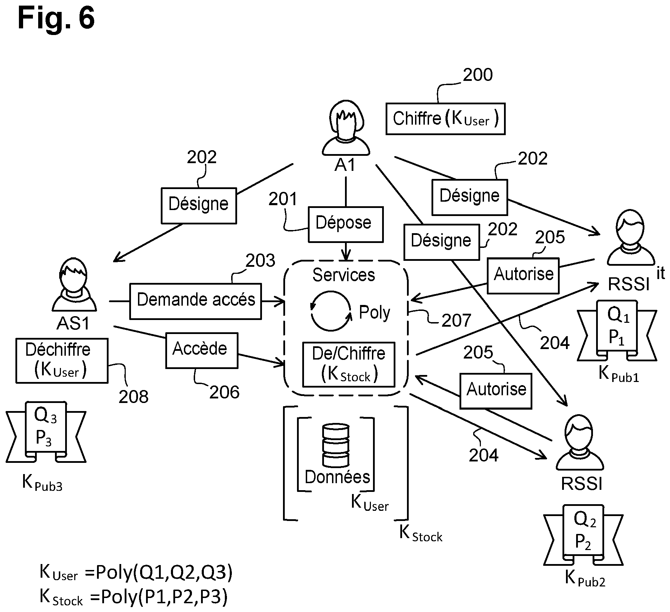

La figure 6 illustre le cas du système décrit à la figure 2 avec un dépositaire, un accédant et deux ayants droits RSSI. Ce qui conduit à l'obtention des secrets de partage suivants, respectivement pour l'accédant AS1 et pour chacun des ayants droits RSSI : Kᵤₛₑᵣ = Poly (Q1, Q2, Q3) et K_{stock} = Poly (P1, P2, P3).

Un exemple de fonction polynomiale est donné pour illustrer la génération de clés de chiffrement et ses secrets associés.

Soit un polynôme f(x) = ax²+bx+c, les valeurs a, b et c vont permettre de constituer une clé. Pour retrouver les valeurs a, b et c, il faudra connaître au moins trois valeurs de f(x). Si l'on souhaite permettre que seuls P/N utilisateurs soient requis pour débloquer l'accès à la donnée, i.e., retrouver le polynôme, avec P=2 et N=3, il faut que chaque utilisateur dispose de deux valeurs de f(x). La taille, le degré du polynôme sera choisi, en fonction du nombre d'utilisateurs.

Pour un utilisateur ayant un poids plus important que les autres intervenants du système, le procédé va générer plusieurs secrets Q et P pour cet utilisateur.

Une personne peut aussi contenir plusieurs secrets. Par exemple, soit deux accédants A et B, et un ayant droit C. Dans la répartition des secrets, on ne veut pas que les deux accédants puissent avec leur secret pouvoir retrouver la clé. Il faut donc que le nombre Nb Secret de A + Nb Secret de B soit toujours inférieur au nombre Nb Secret de A + Nb Secret de C ou au Nb Secret de B + Nb Secret de C. Pour se faire, on donnera un secret à A, un secret à B et deux secrets à C. Il y aura donc quatre secrets au total, d'où l'utilisation d'un polynôme de degrés 3.

L'invention fait appel à un mécanisme de sécurité avec double protection indépendante, avec une génération de clés de chiffrement distinctes. L'invention permet un cloisonnement vis-à-vis des administrateurs, le service USKS et le service SKS ne peuvent pas, individuellement, déchiffrer des données stockées.

## Revendications

1. Procédé de stockage et de partage de données chiffrées dans un système comprenant au moins un dépositaire, au moins un accédant et au moins un ayant droit, un service de sécurisation (141) disposant d'une clé publique K_{PubDSS} et une clé privée K_{PrivDSS}, un service de gestion des clés de stockage K_{Stock}(142) utilisées pour le stockage des données, un service de gestion des clés de chiffrement/déchiffrement K_{User} (132), et un serveur de clés (143) configuré pour générer une clé à partir d'un identifiant d'un utilisateur, comportant en combinaison au moins les étapes suivantes :
- un accédant AS1 parmi le ou les accédants s'authentifie auprès de services applicatifs (131) et émet une requête R_{qa} d'accès à un fichier de données chiffrées et stocké D_{cc} (F1),
- lesdits services applicatifs (131) transmettent la requête R_{qa} d'accès à un ayant droit nommé RSSI parmi le ou les ayants droits (F2),
- l'ayant droit RSSI demande au service de gestion des clés de stockage (142) le déblocage de la clé de chiffrement et ledit service de gestion des clés de stockage retourne à l'ayant droit RSSI son secret chiffré associé à la clé Kₛₖₛ du service SKS, sa clé publique Pub_{RSSI}, ((P_{RSSI})_{Ksks})_{PubRSSI} et la liste L_{acc} des personnes ayant un droit d'accès au fichier (F3, F4),
- après authentification de l'ayant droit, un serveur de clés (143) génère une clé privée K_{PrivRssi} pour ledit ayant droit (F5a),
- l'ayant droit RSSI demande au service de gestion des clés de stockage (142) le secret à transformer ((P_{RSSI})_{Ksks})_{PubRSSI} et utilise sa clé privée associée K_{PrivRssi} pour transformer ledit secret ((P_{RSSI})_{Ksks})_{PubRSSI} en déchiffrant avec sa clé privée K_{PrivRssi} et en chiffrant avec la clé publique K_{PubAS1} de l'accédant AS1 pour obtenir un deuxième secret chiffré ((P_{RSSI})_{Ksks})_{PubAS1} transmis au service de gestion des clés de stockage, pour stockage (F5b),
- l'ayant droit RSSI demande au service de gestion des clés (132), le secret associé à la clé du dépositaire Kᵤₛₑᵣ à transformer ((O_{RSSI})_{Kusks})_{PubRSSI} et en utilisant sa clé privée K_{PrivRssi} transforme ledit secret ((O_{RSSI})_{Ksks})_{PubRSSI} en déchiffrant avec sa clé privée K_{PrivRssi} et en chiffrant avec la clé publique K_{PubAS1} de l'accédant AS1, le secret transformé ((O_{RSSI})_{Kusks})_{PubAS1} est transmis pour stockage par le service de gestion des clés, (132) (F6),
- les services applicatifs (131) indiquent la disponibilité du fichier doublement chiffré (F7),
- l'accédant AS1 s'authentifie auprès des services applicatifs (131) et émet une requête R_{f} pour récupérer le fichier chiffré (G1),
- l'accédant AS1 demande la clé du fichier au service de gestion des clés de stockage, (142) (G2),
- le service de gestion des clés de stockage, (142), retourne à l'accédant AS1 le secret de l'ayant droit RSSI doublement chiffré ((P_{RSSI})_{Ksks})_{PubAS1} pour la clé de stockage K_{stock} et le secret de l'accédant AS1 doublement chiffré ((P_{AS1})_{Ksks})_{PubAS1} associé à la clé K_{User} (G3),
- l'accédant AS1 s'authentifie auprès du serveur de clés (143) pour obtenir sa clé privée K_{PRIVAS1} associée à sa clé publique K_{PubAS1} (G4a),
- l'accédant AS1 transforme les deux secrets chiffrés qu'il a reçus ((P_{PSSI})_{Ksks})_{PubAS1} et ((P_{AS1})_{Ksks})_{PubAS1} en les déchiffrant avec sa clé privée K_{PRIVAS1} pour obtenir respectivement deux secrets (P_{RSSI})_{Ksks}, (P_{AS1})_{Ksks} (G4b),
- l'accédant AS1 envoie au service de gestion des clés de stockage (142), les deux secrets associés à la clé de stockage K_{stock} (P_{RSSI})_{Ksks}, (P_{AS1})_{Ksks} (G4c),
- le service de gestion des clés de stockage (142) recalcule la clé de stockage K_{Stock} à partir des secrets (P_{RSSI})_{Ksks}, (P_{AS1})_{Ksks} et retourne la clé de stockage chiffrée avec sa clé publique (K_{Stock})_{KPubDSS} (G4d),
- l'accédant AS1 demande au service de sécurité (141), le fichier et transmet la clé de stockage du fichier (K_{stock})_{KPubDSS} (G5),
- le service de sécurité (141) récupère le fichier après du service de stockage (150) (G6a), et déchiffre avec sa clé privée K_{PrivDSS}, le ficher ((Données)_{KUser} + (P_{AS1})_{Ksks})_{PubAS1})_{KStock} avec la clé de stockage K_{Stock} et retourne le fichier déchiffré à l'accédant AS1, (Données)_{KUser} + (P_{AS1})_{Ksks})_{PubAS1} (G6a, G6b),
- l'accédant AS1 transforme les deux secrets chiffrés ((O_{RSSI})_{Kusks})_{PubAS1} ((Q_{AS1})_{Kusks})_{PubAS1} associés à sa clé Kᵤₛₑᵣ en (Q_{RSSI})_{Kusks} (Q_{AS1})_{Kusks} en déchiffrant avec sa clé privée K_{PRIVAS1} et les envoie au service de gestion des clés (132) (G7),
- le service de gestion des clés, 132, recalcule la clé du dépositaire K_{User} à partir des secrets (O_{RSSI})_{Kusks}, (Q_{AS1})_{Kusks} transmis par l'accédant AS1 et retourne la nouvelle clé chiffrée(K_{User})_{KPubAS1} (G8),
- l'accédant AS1 déchiffre (K_{User})_{KPubAs1} avec sa clé privée, K_{PRIVAS1}, puis l'accédant AS1 déchiffre le fichier (Données)_{KUser} avec K_{User} et avertit le service applicatif, (131).

2. Procédé selon la revendication 1 **caractérisé en ce qu'**il comporte une étape de stockage de fichier dans laquelle :
- Un dépositaire A1 parmi le ou les dépositaires s'authentifie auprès des services applicatifs (131) et demande le droit de déposer un fichier dans une zone de stockage,
- Le service de gestion des clés (132) génère une clé K_{User} et un nombre de secrets de partage K_{User} = (Q_{AS1}, Q_{RSSI}) correspondant au nombre d'accédants et au nombre d'ayants droits (E2a),
- Le service de gestion des clés, (132) :
- demande au serveur de clés (143) la clé publique K_{PubA1} du dépositaire A1, la clé publique K_{PubRSSI} de l'ayant droit RSSI et la clé publique K_{PubAS1} de l'accédant AS1 (E2b),
- chiffre les secrets de partage générés avec sa clé K_{Usks} et les clés publiques des accédants et des ayants droits (E2c),
- chiffre K_{User} pour obtenir(K_{User})_{KPubA1} et retourne la clé (K_{User})_{KPubA1} au dépositaire A1 (E2d),
- Le dépositaire A1 demande au service de gestion des clés de stockage (142) la création d'une clé de partage pour l'accédant AS1 et d'une portion de clé pour l'ayant droit RSSI (E3a),
- Le service de gestion des clés de stockage (142), demande au serveur de clés (143) la clé publique K_{PubRSSI} de l'ayant droit RSSI la clé publique K_{PubAS1} de l'accédant AS1 (E3b),
- Le service de gestion des clés de stockage SKS (142) chiffre :
- les secrets avec la clé de stockage K_{Stock} ((P_{As1})_{Ksks})_{KPubAS1}, ((P_{RSSI}) _{Ksks})_{KPubRSSI},
- la clé de stockage K_{Stock} par la clé publique du service de sécurisation : (K_{Stock})_{KPubdss} (E3c),
- retourne la clé (K_{Stock}) _{KPubdss} et les secrets ((P_{AS1})_{Ksks})_{KPubAS1}, ((P_{RSSI}) Kₛₖₛ)_{KPubRSSI} au dépositaire A1 (E3d),
- Le dépositaire A1 s'authentifie et demande au serveur de clés (143) la clé privée K_{PrivA1} du dépositaire A1,
- Le dépositaire A1 déchiffre la clé (K_{User})_{KPubA1} et chiffre la donnée avec K_{User} : (Données)_{KUser} (E4b),
- Le dépositaire A1 envoie au service de sécurisation (141) : les données (Données)_{KUser} à stocker, la clé de chiffrement (K_{Stock}) _{KPubdss} et les informations associées pour être stockées ((P_{AS1})_{Ksks})_{PubAS1}, (P_{RSSI})_{Ksks})_{PubRSSI} (E4c),
- Le service de sécurisation déchiffre la clé de chiffrement (K_{Stock}) _{KPubdss} avec sa clé privée K_{Privdss}, et chiffre avec la clé K_{Stock} (Données)_{KUser} et ajoute les informations ((P_{AS1})_{Ksks})_{PubAS1}, (P_{RSSI})_{Ksks})_{PubRSSI} qui donne ((Données)_{KUser})_{KStock} + (P_{AS1})_{Ksks})_{PubAS1} + (P_{RSSI})_{Ksks})_{PubRSSI} (E5),
- Le service de sécurisation (141) transmet au stockage le fichier doublement chiffré ((Données)_{KUser} + (P_{AS1})_{Ksks})_{PubAS1})_{KStock}+ (P_{RSSI})_{Ksks})_{PubRSSI} (E6).

3. Procédé selon l'une des revendications 1 ou 2 **caractérisé en ce qu'**il comporte en outre une étape d'horodatage par le dépositaire avant stockage.

4. Procédé selon l'une des revendications 1 à 3 **caractérisé en ce que** les secrets sont générés en exécutant une fonction polynomiale.

5. Système de stockage et de partage de données dans un système comprenant au moins un dépositaire A1, au moins un accédant AS1 et au moins un ayant droit nommé RSSI dialoguant au moyen d'un protocole de communication **caractérisé en ce qu'**il comporte au moins les éléments suivants :
- Ledit dépositaire A1 dispose d'un terminal (100) sur lequel est installée une application (101), disposant de fonctions cryptographiques (génération de clés de chiffrement/déchiffrement, chiffrement des données, des clés et des secrets), un processeur (102) configuré pour exécuter les étapes du procédé selon l'une des revendications précédentes et un module de communication (103),
- Ledit au moins accédant AS1 dispose d'un terminal (110) sur lequel est installée une application (111) disposant de fonctions cryptographiques permettant le déchiffrement des fichiers/données, des clés et des secrets, un processeur (112) configuré pour exécuter les étapes du procédé selon l'une des revendications précédentes et un module de communication (113),
- Ledit au moins ayant droit RSSI dispose d'un terminal (120) sur lequel est installée une application (122), disposant de fonctions cryptographiques permettant le déchiffrement et chiffrement des secrets, un processeur (122) configuré pour exécuter les étapes du procédé selon l'une des revendications précédentes et un module de communication (123),
- Une zone de stockage (150).

6. Système selon la revendication 5 **caractérisé en ce que** les fonctions de génération de secrets sont des fonctions polynomiales.

7. Système selon l'une des revendications 5 ou 6 **caractérisé en ce que** les services applicatifs sont des logiciels métiers.

8. Système selon l'une des revendications 5 à 7 **caractérisé en ce que** le protocole de communication est le protocole HTTPS/TLS, HyperText Transfer Protocol Secure/ Transport Layer Security.

## Patentansprüche

1. Verfahren zum Speichern und Teilen verschlüsselter Daten in einem System, das mindestens einen Verwahrer, mindestens einen Zugreifer und mindestens einen Berechtigten, einen über einen öffentlichen Schlüssel K_{PubDSS} und einen privaten Schlüssel K_{PrivDSS} verfügenden Sicherheitsdienst (141), einen Dienst zur Verwaltung von zum Speichern von Daten verwendeten Speicherschlüsseln K_{Stock} (142), einen Dienst zur Verwaltung von Ver-/Entschlüsselungsschlüsseln K_{User} (132) und einen zum Generieren eines Schlüssels auf der Basis einer Benutzerkennung konfigurierten Schlüsselserver (143) umfasst, das in Kombination mindestens die folgenden Schritte aufweist:
- ein Zugreifer AS1 unter den ein oder mehreren Zugreifern authentifiziert sich bei Anwendungsdiensten (131) und sendet eine Anforderung R_{qa} von Zugang zu einer gespeicherten Datei von verschlüsselten Daten D_{cc} (F1),
- die Anwendungsdienste (131) übertragen die Zugangsanforderung R_{qa} zu einem RSSI genannten Berechtigten unter den ein oder mehreren Berechtigten (F2),
- der Berechtigte RSSI fordert vom Speicherschlüsselverwaltungsdienst (142) die Freigabe des Verschlüsselungsschlüssels an, und der Speicherschlüsselverwaltungsdienst gibt sein mit dem Schlüssel Kₛₖₛ des SKS-Dienstes assoziiertes verschlüsseltes Geheimnis, seinen öffentlichen Schlüssel Pub_{RSSI}, ((P_{RSSI})_{Ksks})_{PubRSSI} und die Liste L_{acc} der Personen mit Zugriffsrecht auf die Datei an den Berechtigten RSSI zurück (F3, F4),
- nach der Authentifizierung des Berechtigten generiert ein Schlüsselserver (143) einen privaten Schlüssel K_{PrivRssi} für den Berechtigten (F5a),
- der Berechtigte RSSI fordert vom Speicherschlüsselverwaltungsdienst (142) das zu transformierende Geheimnis ((P_{RSSI})_{Ksks})_{PubRSSI} an und verwendet seinen assoziierten privaten Schlüssel K_{PrivRssi} zum Transformieren des Geheimnisses ((P_{RSSI})_{Ksks})_{PubRSSI} durch Entschlüsseln mit seinem privaten Schlüssel K_{PrivRssi} und Verschlüsseln mit dem öffentlichen Schlüssel K_{PubAS1} des Zugreifers AS1, um ein zum Schlüsselverwaltungsdienst für das Speichern übertragenes zweites verschlüsseltes Geheimnis ((P_{RSSI})_{Ksks})_{PubAs1} zu erhalten, zum Speichern (F5b),
- der Berechtigte RSSI fordert vom Schlüsselverwaltungsdienst (132) das mit dem Schlüssel des Verwahrers Kᵤₛₑᵣ assoziierte, zu transformierende Geheimnis ((Q_{RSSI})_{Kusks})_{PubRSSI} an und transformiert das Geheimnis ((Q_{RSSI})_{Ksks})_{PubRSSI} unter Verwendung seines privaten Schlüssels K_{PrivRssi} durch Entschlüsseln mit seinem privaten Schlüssel K_{PrivRssi} und Verschlüsseln mit dem öffentlichen Schlüssel K_{PubAS1} des Zugreifers AS1, das transformierte Geheimnis ((Q_{RSSI})_{Kusks})_{PubAS1} wird zum Speichern durch den Schlüsselverwaltungsdienst (132) übertragen (F6),
- die Anwendungsdienste (131) zeigen die Verfügbarkeit der doppelt verschlüsselten Datei an (F7),
- der Zugreifer AS1 authentifiziert sich bei den Anwendungsdiensten (131) und sendet eine Anforderung R_{f} zum Abrufen der verschlüsselten Datei (G1),
- der Zugreifer AS1 fordert den Schlüssel der Datei vom Speicherschlüsselverwaltungsdienst (142) an (G2),
- der Speicherschlüsselverwaltungsdienst (142) gibt das doppelt verschlüsselte Geheimnis ((P_{RSSI})_{Ksks})_{PubAs1} des Berechtigten RSSI für den Speicherschlüssel K_{stock} und das mit dem Schlüssel K_{User} assoziierte doppelt verschlüsselte Geheimnis ((P_{AS1})_{Ksks})_{PubAS1} des Berechtigten AS1 an den Berechtigten AS1 zurück (G3),
- der Zugreifer AS1 authentifiziert sich beim Schlüsselserver (143), um seinen mit seinem öffentlichen Schlüssel K_{PubAS1} assoziierten privaten Schlüssel K_{PRIVAS1} zu erhalten (G4a),
- der Zugreifer AS1 transformiert die beiden von ihm erhaltenen verschlüsselten Geheimnisse ((P_{RSSI})_{Ksks})_{PubAs1} und ((P_{AS1})_{Ksks})_{PubAS1} durch Entschlüsseln derselben mit seinem privaten Schlüssel K_{PRIVAS1}, um jeweils zwei Geheimnisse (P_{RSSI})_{Ksks}, (P_{AS1})_{Ksks} zu erhalten (G4b),
- der Zugreifer AS1 sendet die beiden mit dem Speicherschlüssel K_{stock} assoziierten Geheimnisse (P_{RSSI})_{Ksks}, (P_{AS1})_{Ksks} zum Speicherschlüsselverwaltungsdienst (142) (G4c),
- der Speicherschlüsselverwaltungsdienst (142) berechnet den Speicherschlüssel K_{Stock} auf der Basis der Geheimnisse (P_{RSSI})_{Ksks}, (P_{AS1})_{Ksks} neu und gibt den mit seinem öffentlichen Schlüssel (K_{stock})_{KPubDSS} verschlüsselten Speicherschlüssel zurück (G4d),
- der Zugreifer AS1 fordert die Datei vom Sicherheitsdienst (141) an und überträgt den Speicherschlüssel der Datei (K_{stock})_{KPubDSS} (G5),
- der Sicherheitsdienst (141) ruft die Datei vom Speicherdienst (150) ab (G6a) und entschlüsselt mit seinem privaten Schlüssel K_{PrivDss}, die Datei ((Daten)_{KUser} + (P_{AS1})_{Ksks})_{PubAS1})_{KStock} mit dem Speicherschlüssel K_{Stock} und gibt die entschlüsselte Datei an den Zugreifer AS1 zurück, (Daten)K_{User} + (P_{AS1})_{Ksks})_{PubAS1} (G6a, G6b),
- der Zugreifer AS1 transformiert die beiden mit seinem Schlüssel Kᵤₛₑᵣ assoziierten verschlüsselten Geheimnisse ((Q_{RSSI})_{Kusks})_{PubAS1} ((Q_{AS1})_{Kusks})_{PubAS1} in (Q_{RSSI})_{Kusks} (Q_{AS1})_{Kusks} durch Entschlüsseln mit seinem privaten Schlüssel K_{PRIVAS1} und sendet sie zum Schlüsselverwaltungsdienst (132) (G7),
- der Schlüsselverwaltungsdienst 132 berechnet den Schlüssel des Verwahrers K_{User} auf der Basis der vom Zugreifer AS1 übertragenen Geheimnisse (Q_{RSSI})_{Kusks} (Q_{AS1})_{Kusks} neu und gibt den neuen verschlüsselten Schlüssel (K_{User})_{KPubAS1} zurück (G8),
- der Zugreifer AS1 entschlüsselt (K_{User})_{KPubAS1} mit seinem privaten Schlüssel K_{PRIVAS1}, dann entschlüsselt der Zugreifer AS1 die Datei (Daten)_{KUser} mit K_{User} und benachrichtigt den Anwendungsdienst (131).

2. Verfahren nach Anspruch 1, **dadurch gekennzeichnet, dass** es einen Schritt des Speicherns einer Datei umfasst, bei dem:
- ein Verwahrer A1 unter den ein oder mehreren Verwahrern sich bei den Anwendungsdiensten (131) authentifiziert und das Recht zum Hinterlegen einer Datei in einem Speicherbereich anfordert,
- der Schlüsselverwaltungsdienst (132) einen Schlüssel K_{User} und eine Anzahl von Teilungsgeheimnissen K_{User} = (Q_{AS1}, Q_{RSSI}) erzeugt, die der Anzahl von Zugreifern und der Anzahl von Berechtigten entspricht (E2a),
- der Schlüsselverwaltungsdienst (132):
- vom Schlüsselserver (143) den öffentlichen Schlüssel K_{PubA1} des Verwahrers A1, den öffentlichen Schlüssel K_{PubRSSI} des Berechtigten RSSI und den öffentlichen Schlüssel K_{PubAS1} des Zugreifers AS1 anfordert (E2b),
- die mit seinem Schlüssel K_{Usks} erzeugten Teilungsgeheimnisse und die öffentlichen Schlüssel der Zugreifer und Berechtigen verschlüsselt (E2c),
- K_{User} zum Erhalten von (K_{User})_{KpubA1} verschlüsselt und den Schlüssel (K_{User})_{KPubA1} an den Verwahrer A1 zurückgibt (E2d),
- der Verwahrer A1 den Speicherschlüsselverwaltungsdienst (142) zum Generieren eines Teilungsschlüssels für den Zugreifer AS1 und eines Teils des Schlüssels für den Berechtigten RSSI auffordert (E3a),
- der Speicherschlüsselverwaltungsdienst (142) beim Schlüsselserver (143) den öffentlichen Schlüssel K_{PubRSSI} des Berechtigten RSSI und den öffentlichen Schlüssel K_{PubAS1} des Zugreifers AS1 anfordert (E3b),
- der Speicherschlüsselverwaltungsdienst SKS (142) Folgendes verschlüsselt:
- die Geheimnisse mit dem Speicherschlüssel K_{Stock} ((P_{AS1})_{Ksks})_{KPubAS1}, ((P_{RSSI})_{Ksks})_{KPubRSSI},
- den Speicherschlüssel K_{Stock} mit dem öffentlichen Schlüssel des Sicherheitsdienstes: (K_{Stock})_{KPubdss} (E3c),
- gibt den Schlüssel (K_{Stock})_{KPubdss} und die Geheimnisse ((P_{AS1})_{Ksks})_{KPubAs1}, ((P_{RSSI})_{Ksks})_{KPubRSSI} an den Verwahrer A1 zurück (E3d),
- der Verwahrer A1 authentifiziert sich und fordert vom Schlüsselserver (143) den privaten Schlüssel K_{PrivA1} des Verwahrers A1 an,
- der Verwahrer A1 entschlüsselt den Schlüssel (K_{User})_{KPubA1} und verschlüsselt die Daten mit K_{User}: (Daten)_{KUser} (E4b),
- der Verwahrer A1 sendet zum Sicherheitsdienst (141): die zu speichernden Daten (Daten)_{KUser}, den Verschlüsselungsschlüssel (K_{Stock})_{KPubdss} und die assoziierten Informationen zum Speichern ((P_{AS1})_{Ksks})_{PubAS1}, (P_{RSSI})_{Ksks})_{PubRSSI} (E4c),
- der Sicherheitsdienst entschlüsselt den Verschlüsselungsschlüssel (K_{Stock})_{KPubdss} mit seinem privaten Schlüssel K_{Privdss} und verschlüsselt mit dem Schlüssel K_{Stock} (Daten)_{KUser} und fügt die Informationen ((P_{AS1})_{Ksks})_{pubAS1}, (P_{RSSI})_{Ksks})_{PubRSSI} hinzu, was ((Daten)_{KUser})_{KStock} + (P_{AS1})_{Ksks})_{PubAS1} + (P_{RSSI})_{Ksks})_{PubRSSI} ergibt (E5),
- der Sicherungsdienst (141) überträgt die doppelt verschlüsselte Datei ((Daten)_{KUser} + (P_{AS1})_{Ksks})P_{ubAS1})_{Kstock} + (P_{RSSI})_{Ksks})_{PubRSSI} zum Speicher (E6).

3. Verfahren nach Anspruch 1 oder 2, **dadurch gekennzeichnet, dass** es ferner einen Zeitstempelungsschritt durch den Verwahrer vor dem Speichern umfasst.

4. Verfahren nach einem der Ansprüche 1 bis 3, **dadurch gekennzeichnet, dass** die Geheimnisse durch Ausführen einer Polynomfunktion erzeugt werden.

5. System zum Speichern und Teilen von Daten in einem System, das mindestens einen Verwahrer A1, mindestens einen Zugreifer AS1 und mindestens einen RSSI genannten Berechtigten umfasst, die mittels eines Kommunikationsprotokolls miteinander in Dialog treten, **dadurch gekennzeichnet, dass** es mindestens die folgenden Elemente umfasst:
- der Verwahrer A1 verfügt über ein Terminal (100), auf dem eine Anwendung (101) installiert ist, die über kryptographische Funktionen (Generierung von Ver-/Entschlüsselungsschlüsseln, Verschlüsselung von Daten, Schlüsseln und Geheimnissen) verfügt, einen zum Ausführen der Verfahrensschritte nach einem der vorhergehenden Ansprüche konfigurierten Prozessor (102) und ein Kommunikationsmodul (103),
- der mindestens eine Zugreifer AS1 verfügt über ein Terminal (110), auf dem eine Anwendung (111) installiert ist, die über kryptographische Funktionen zur Entschlüsselung von Dateien/Daten, Schlüsseln und Geheimnissen verfügt, einen zum Ausführen der Verfahrensschritte nach einem der vorhergehenden Ansprüche konfigurierten Prozessor (112) und ein Kommunikationsmodul (113),
- der mindestens eine Berechtigte RSSI verfügt über ein Terminal (120), auf dem eine Anwendung (122) installiert ist, die über kryptographische Funktionen zur Ent- und Verschlüsselung von Geheimnissen verfügt, einen zum Ausführen der Verfahrensschritte nach einem der vorhergehenden Ansprüche konfigurierten Prozessor (122) und ein Kommunikationsmodul (123),
- einen Speicherbereich (150).

6. System nach Anspruch 5, **dadurch gekennzeichnet, dass** die Funktionen zur Erzeugung von Geheimnissen Polynomfunktionen sind.

7. System nach Anspruch 5 oder 6, **dadurch gekennzeichnet, dass** die Anwendungsdienste Branchensoftware sind.

8. System nach einem der Ansprüche 5 bis 7, **dadurch gekennzeichnet, dass** das Kommunikationsprotokoll das Protokoll HTTPS/TLS, HyperText Transfer Protocol Secure/ Transport Layer Security, ist.

## Claims

1. A method for storing and sharing encrypted data in a system comprising at least one depositary, at least one accessing person, at least one authorised person, a security service (141) which has a public key K_{PubDSS} and a private key K_{PrivDSS}, a storage key management service K_{Stock} (142) used for the storage of the data, a service for controlling the encryption/decryption keys K_{User} (132) and a key server (143) which is configured to generate a key from a user identifier, having in combination at least the following steps:
- an accessing person AS1 among the accessing person or persons authenticates themselves with application services (131) and transmits a request R_{qa} for access to a stored and encrypted data file D_{cc} (F1),
- the application services (131) transmit the request R_{qa} for access to an authorised person referred to as RSSI among the authorised person or persons (F2),
- the authorised person RSSI requests that the storage key management service (142) unlocks the encryption key and the storage key management service returns to the authorised person RSSI his/her encrypted secret associated with the key Kₛₖₛ of the SKS service, his/her public key Pub_{RSSI}, ((P_{RSSI})_{Ksks})_{PubRSSI} and the list L_{acc} of the persons authorised to access the file (F3, F4),
- after authentication of the authorised person, a key server (143) generates a private key K_{PrivRssi} for the authorised person (F5a),
- the authorised person RSSI requests from the storage key management service (142) the secret to be transformed ((P_{RSSI})_{Ksks})_{PubRSSI} and uses his/her associated private key K_{PrivRssi} in order to transform the secret ((P_{RSSI})_{Ksks})_{PubRSSI} by decrypting with his/her private key K_{PrivRssi} and encrypting with the public key K_{PubAS1} of the accessing person AS 1 in order to obtain a second encrypted secret ((P_{RSSI})_{Ksks})_{PubAs1} transmitted to the storage key management service, for storage (F5b),
- the authorised person RSSI requests from the key management service (132) the secret associated with the key of the depositary Kᵤₛₑᵣ to be transformed ((Q_{RSSI})_{Kusks})_{PubRSSI} and using his/her private key K_{PrivRssi} transforms the secret ((Q_{RSSI})_{Ksks})_{PubRSSI} by decrypting with his/her private key K_{PrivRssi} and by encrypting with the public key K_{PubAS1} of the accessing person AS1, the transformed secret ((Q_{RSSI})_{Kusks})_{PubAS1} is transmitted for storage by the key management service (132) (F6),
- the application services (131) indicate the availability of the double-encrypted file (F7),
- the accessing person AS1 authenticates himself/herself with the application services (131) and transmits a request R_{f} to recover the encrypted file (G1),
- the accessing person AS1 requests the key of the file from the storage key management service (142) (G2),
- the storage key management service (142) returns to the accessing person AS1 the double-encrypted secret ((P_{RSSI})_{Ksks})_{PubAs1} of the authorised person RSSI for the storage key K_{stock} and the double-encrypted secret ((P_{AS1})_{Ksks})_{PubAS1} of the accessing person AS1 associated with the key K_{User} (G3),
- the accessing person AS1 authenticates himself/herself with the key server (143) in order to obtain his/her private key K_{PRIVAS1} associated with his/her public key K_{PubAS1} (G4a),
- the accessing person AS1 transforms the two encrypted secrets which he/she has received ((P_{RSSI})_{Ksks})_{PubAs1} and ((P_{AS1})_{Ksks})_{PubAS1} by decrypting them with his/her private key K_{PRIVAS1} in order to obtain two secrets (P_{RSSI})_{Ksks}, (P_{AS1})_{Ksks} (G4b), respectively,
- the accessing person AS1 sends to the storage key management service (142) the two secrets associated with the storage key K_{stock} (P_{RSSI})_{Ksks}, (P_{AS1})_{Ksks} (G4c),
- the storage key management service (142) recalculates the storage key K_{stock} from the secrets (P_{RSSI})_{Ksks}, (P_{AS1})_{Ksks} and returns the storage key encrypted with its public key (K_{Stock})_{KPubDSS} (G4d),
- the accessing person AS1 requests the file from the security service (141) and transmits the storage key of the file (K_{stock})_{KPubDSS} (G5),
- the security service (141) recovers the file from the storage service (150) (G6a) and decrypts with its private key K_{PrivDSS} the file ((Data)_{KUser} + (P_{AS1})_{Ksks})_{PubAS1})_{Kstock} with the storage key K_{Stock} and returns the decrypted file to the accessing person AS1, (Data)_{Kuser} + (P_{AS1})_{Ksks})_{PubAS1} (G6a, G6b),
- the accessing person AS1 transforms the two encrypted secrets ((Q_{RSSI})_{Kusks})_{PubAS1} ((Q_{AS1})_{Kusks})_{PubAS1} associated with his/her key Kᵤₛₑᵣ into (Q_{RSSI})_{Kusks} (Q_{AS1})_{Kusks} by decrypting with his/her private key K_{PRIVAS1} and sends them to the key management service (132) (G7),
- the key management service 132 recalculates the key of the depositary K_{User} based on the secrets (Q_{RSSI}) _{Kusks} (Q_{AS1})_{Kusks} transmitted by the accessing person AS1 and returns the new encrypted key (K_{User})_{KPubAS1} (G8),
- the accessing person AS1 decrypts (K_{User})_{KPubAs1} with his/her private key K_{PRIVAS1} then the accessing person AS1 decrypts the file (Data)_{Kuser} with K_{User} and notifies the application service (131).

2. The method according to claim 1, **characterised in that** it comprises a file storage step in which:
- a depositary A1 among the depositary or depositaries authenticates himself/herself with the application services (131) and requests the right to deposit a file in a storage area,
- the key management service (132) generates a key K_{User} and a number of sharing secrets K_{User} = (Q_{AS1}, Q_{RSSI}) corresponding to the number of accessing persons and the number of authorised persons (E2a),
- the key management service (132):
- requests from the key server (143) the public key K_{PubA1} of the depositary A1, the public key K_{PubRSSI} of the authorised person RSSI and the public key K_{PubAS1} of the accessing person AS1 (E2b),
- encrypts the sharing secrets generated with his/her key K_{Usks} and the public keys of the accessing persons and the authorised persons (E2c),
- encrypts K_{User} in order to obtain (K_{User})_{KPubA1} and returns the key (K_{User})_{KPubA1} to the depositary A1 (E2d),
- the depositary A1 requests from the storage key management service (142) the creation of a sharing key for the accessing person AS1 and a portion of key for the authorised person RSSI (E3a),
- the storage key management service (142) requests from the key server (143) the public key K_{PubRSSI} of the authorised person RSSI and the public key K_{PubAS1} of the accessing person AS1 (E3b),
- the storage key management service SKS (142) encrypts:
- the secrets with the storage key K_{Stock} ((P_{AS1})_{Ksks})_{KPubAS1}, ((P_{RSSI})_{Ksks})_{KPubRSSI},
- the storage key K_{Stock} with the public key of the security service: (K_{Stock})_{KPubdss} (E3c),
- returns the key (K_{Stock})_{KPubdss} and the secrets ((P_{AS1})_{Ksks})_{KPubAS1}, ((P_{RSSI})_{Ksks})_{KPubRSSI} to the depositary A1 (E3d),
- the depositary A1 authenticates himself and requests from the key server (143) the private key K_{PrivA1} of the depositary A1,
- the depositary A1 decrypts the key (K_{User})_{KPubA1} and encrypts the data item with K_{User}: (Data)_{Kuser} (E4b),
- the depositary A1 sends to the security service (141): the data (Data)_{Kuser} to be stored, the encryption key (K_{Stock})_{KPubdss} and the associated information items to be stored ((P_{AS1})_{Ksks})_{PubAS1}, ((P_{RSSI})_{Ksks})_{PubRSSI}(E4c),
- the security service decrypts the encryption key (K_{Stock})_{KPubdss} with its private key K_{Privdss}, and encrypts with the key K_{Stock} (Data)_{Kuser} and adds the information items ((P_{AS1})_{Ksks})_{PubAS1}, (P_{RSSI})_{Ksks})_{PubRSSI} which gives ((Data)_{Kuser})_{Kstock} + (P_{AS1})_{Ksks})_{PubAS1} + (P_{RSSI})_{Ksks})_{PubRSSI} (E5),
- the security service (141) transmits to the storage the double-encrypted file ((Data)_{KUser} + (P_{AS1})_{Ksks})_{PubAS1})_{KStock}, (P_{RSSI})_{Ksks})_{PubRSSI} (E6).

3. The method according to claim 1 or 2, **characterised in that** it further comprises a step of time stamping by the depositary prior to storage.

4. The method according to any one of claims 1 to 3, **characterised in that** the secrets are generated by carrying out a polynomial function.

5. A system for storing and sharing data in a system comprising at least one depositary A1, at least one accessing person AS1 and at least one authorised person called RSSI, which communicate via a communication protocol **characterised in that** it comprises at least the following elements:
- the depositary A1 has a terminal (100) on which an application (101) is installed which has cryptographic functions (generation of encryption/decryption keys, encryption of data, keys and secrets), a processor (102) which is configured to carry out the steps of the method according to any one of the preceding claims and a communication module (103),
- the at least one accessing person AS1 has a terminal (110) on which there is installed an application (111) which has cryptographic functions which enable files/data, keys and secrets to be decrypted, a processor (112) which is configured to carry out the steps of the method according to any one of the preceding claims and a communication module (113),
- the at least one authorised person RSSI has a terminal (120) on which there is installed an application (122) which has cryptographic functions which enable secrets to be decrypted and encrypted, a processor (122) which is configured to carry out the steps of the method according to any one of the preceding claims and a communication module (123),
- a storage area (150).

6. The system according to claim 5, **characterised in that** the secret generation functions are polynomial functions.

7. The system according to claim 5 or 6, **characterised in that** the application services are business software items.

8. The system according to any one of claims 5 to 7, **characterised in that** the communication protocol is the HTTPS/TLS, HyperText Transfer Protocol Secure/ Transport Layer Security protocol.
